# EUROPÄISCHE PATENTSCHRIFT

(11) **EP 2 882 559 B1**
(45) Veröffentlichungstag und Bekanntmachung des Hinweises auf die Patenterteilung: **13.04.2016**
(21) Anmeldenummer: 13756290.6
(22) Anmeldetag: 23.07.2013
(51) Int. Cl.: B23K 9/10, B23K 9/32, H02J 7/02, B23K 37/02

(54) **TRAGBARE SCHWEISSANORDNUNG UND VERFAHREN ZUM BETREIBEN EINER TRAGBAREN SCHWEISSANORDNUNG, MIT EINEM IN ABHÄNGIGKEIT DES BETRIEBSMODUS EINES SCHWEISSGERÄTS GESTEUERTEN AKKUMULATOR**
PORTABLE WELDING ARRANGEMENT AND METHOD OF OPERATING A PORTABLE WELDING ARRANGEMENT, SAID ARRANGEMENT COMPRISING A STORAGE BATTERY CONTROLLED IN ACCORDANCE WITH THE OPERATING MODE OF WELDING APPARATUS
INSTALLATION DE SOUDAGE PORTABLE ET PROCÉDÉ SERVANT À FAIRE FONCTIONNER UNE INSTALLATION DE SOUDAGE PORTABLE COMPORTANT UN ACCUMULATEUR COMMANDÉ EN FONCTION DU MODE DE FONCTIONNEMENT D'UNE INSTALLATION DE SOUDAGE

(30) Priorität: 10.08.2012 AT 503162012
(43) Veröffentlichungstag der Anmeldung: 17.06.2015
(73) Patentinhaber: Fronius International GmbH, 4643 Pettenbach (AT)
(72) Erfinder: STARZENGRUBER, Andreas, A-4654 Bad Wimsbach-Neydharting (AT); SPEIGNER, Alexander, A-4560 Kirchdorf an der Krems (AT); BINDER, Jürgen, A-4644 Scharnstein (AT)
(74) Vertreter: Sonn & Partner Patentanwälte
(86) Internationale Anmeldenummer: PCT/AT2013/050142
(87) Internationale Veröffentlichungsnummer: WO 2014/022870

(56) Entgegenhaltungen:
- JP-A- H05 137 270
- US-A1- 2009 057 285
- US-A1- 2012 056 581
- US-A1- 2012 175 357

## Beschreibung

Die Erfindung betrifft eine tragbare Schweißanordnung mit einem Schweißgerät mit einem Akkumulator, einer Stromquelle, einer Schweißsteuerung und einem Anschluss für einen Schweißbrenner, wobei der Betriebsmodus des Schweißgeräts zwischen einem Bereitschaftsbetrieb und einem Schweißbetrieb wechselbar ist, und mit einem mit einem Versorgungsnetz und dem Schweißgerät verbindbaren Ladegerät mit einer Ladesteuerung zum Laden des Akkumulators.

Ebenso betrifft die Erfindung ein Verfahren zum Betreiben einer tragbaren Schweißanordnung mit einem Schweißgerät mit einem Akkumulator, einer Stromquelle, einer Schweißsteuerung und einem Anschluss für einen Schweißbrenner, wobei der Betriebsmodus des Schweißgeräts zwischen einem Bereitschaftsbetrieb und einem Schweißbetrieb gewechselt wird, wobei der Akkumulator des Schweißgeräts zum Laden mit einem mit einem Versorgungsnetz verbundenen Ladegerät verbunden wird.

Für besonders schwer zugängliche Orte, an welchen eine Schweißung vorgenommen werden soll, wie z.B. auf einem Gerüst oder auch für Schweißungen, bei denen direkte Versorgung mit elektrischer Energie unzulässig ist, wie z.B. in einem Kessel, ist die Verwendung von tragbaren batteriebetriebenen Schweißgeräten besonders vorteilhaft oder essentiell. Die meisten akkubetriebenen Schweißgeräte des Standes der Technik können ausschließlich im Batteriebetrieb verwendet werden und nach Durchführung des Schweißprozesses kann eine Aufladung des Akkumulators mit entsprechenden Ladegeräten vorgenommen werden. Ein sogenannter Hybridbetrieb, bei dem das tragbare Schweißgerät, dort wo es zulässig und möglich ist, auch an das Versorgungsnetz angeschlossen und während der Durchführung der Schweißprozesse geladen werden kann, ist nicht bekannt.

Die WO 2007/094896 A1 betrifft ein batteriebetriebenes Schweißgerät mit einer vorzugsweise entfernbaren Batterie und einem Ladegerät, welches eine spezielle Steuereinrichtung aufweist.

Die EP 1 535 691 A2 beschreibt ein tragbares Schweißgerät mit austauschbaren Akkumulatoren und einer Regeleinrichtung zur Regelung der gewünschten Ausgangsspannung in Abhängigkeit des gewünschten Schweißprozesses. Über das Ladegerät zum Laden des Akkumulators wird in diesem Dokument keine Information wiedergegeben.

Der nächtliegenden Stand der Technik US 2009/057285 A1 beschreibt ein tragbares, batteriebetriebenes Schweißgerät der gegenständlichen Art, welches über ein entsprechendes Netzkabel mit dem Versorgungsnetz verbunden werden kann. Details über die Ladung der Batterie, insbesondere über ihre Steuerung, sind nicht enthalten.

Die JP H05 137270 A offenbart eine Steuerung zum Laden eines Akkumulators, wobei die Ladung unabhängig von der Anwendung bei einem tragbaren Schweißgerät, aber abhängig vom Betriebsmodus ist.

Die Aufgabe der vorliegenden Erfindung besteht in der Schaffung einer oben genannten tragbaren Schweißanordnung mit einem Schweißgerät und einem Ladegerät sowie in der Schaffung eines Verfahrens zum Betreiben einer derartigen tragbaren Schweißanordnung, durch welche sowohl ein netzgebundener als auch ein netzunabhängiger Betrieb des Schweißgeräts möglich ist und eine optimale bzw. effiziente Ladung des Akkumulators ermöglicht wird.

Gelöst wird die erfindungsgemäße Aufgabe durch eine oben genannte tragbare Schweißanordnung, wobei die Ladesteuerung des Ladegeräts zur Steuerung der Ladung des Akkumulators des Schweißgeräts in Abhängigkeit des Betriebsmodus des Schweißgeräts ausgebildet ist, wobei die Ladesteuerung des Ladegeräts mit einem Speicher zum Speichern zumindest einer Ladekennlinie verbunden ist und zur Steuerung der Ladung des Akkumulators entsprechend der zumindest einen vorgegebenen Ladekennlinie im Bereitschaftsbetrieb des Schweißgeräts und entsprechend einem vom Schweißstrom abhängigen Ladestrom im Schweißbetrieb des Schweißgeräts ausgebildet ist. Erfindungsgemäß sieht die Ladesteuerung des Ladegeräts also vor, dass die Ladung des Akkumulators des Schweißgeräts je nach Betriebsmodus des Schweißgeräts unterschiedlich durchgeführt werden kann. Dabei wird festgehalten, dass grundsätzlich zwischen einem Bereitschaftsbetrieb und einem Schweißbetrieb unterschieden wird, wobei im Bereitschaftsbetrieb kein Schweißprozess durchgeführt wird, also kein Lichtbogen brennt und im Schweißbetrieb der Schweißprozess durchgeführt wird, also ein Lichtbogen zwischen Schweißbrenner und Werkstück brennt. Unter Umständen könnte die Unterscheidung des Betriebsmodus auch vom Schweißstrom abhängig gemacht werden und ein Betrieb des Schweißbrenners, in dem zwar ein Lichtbogen brennt, aber nur ein sehr geringer Schweißstrom fließt, quasi zum Bereitschaftsbetrieb gezählt werden. Im Bereitschaftsbetrieb wird der Akkumulator des Schweißgeräts anders geladen wird als im echten Schweißbetrieb, während dem ein relativ hoher Schweißstrom fließt. Wichtig ist jedenfalls, dass die Ladung des Akkumulators, sofern diese bei der tragbaren Schweißanordnung möglich ist, je nach Betriebsmodus des Schweißgeräts unterschiedlich durchgeführt wird.

Zur Durchführung der Ladung des Akkumulators des Schweißgeräts in Abhängigkeit des Betriebsmodus des Schweißgeräts ist es von Vorteil, wenn die Schweißsteuerung mit der Ladesteuerung des Ladegeräts über eine Kommunikationsverbindung verbunden ist. Über die Kommunikationsverbindung zwischen der Schweißsteuerung und der Ladesteuerung erhält die Ladesteuerung des Ladegeräts die notwendige Information wie über den Betriebsmodus des Schweißgeräts. Unter dem Begriff der Kommunikationsverbindung fallen sowohl drahtlose Verbindungen als auch leitungsgebundene Verbindungen oder Modulationsverfahren, welche die notwendige Information über den Betriebsmodus des Schweißgeräts über die Versorgungsleitungen aufmodulieren.

Vorteilhafterweise ist die Ladesteuerung des Ladegeräts auch zur Steuerung der Ladung des Akkumulators des Schweißgeräts in Abhängigkeit der Art des Akkumulators ausgebildet. Somit kann die Ladung optimal auf die Art des verwendeten Akkumulators abgestimmt werden. Wie die Ladesteuerung des Ladegeräts die Art des verwendeten Akkumulators erkennt, kann verschiedenartig mit elektronischen (beispielsweise durch unterschiedliche Spannungspegel) oder mechanischen Codierungen oder dem Auslesen entsprechender Information aus einem Speicher, der im Akkumulator enthalten ist, durchgeführt werden. Beispielsweise kann ein Schweißgerät einer tragbaren Schweißanordnung mit unterschiedlichen Akkumulatoren hinsichtlich der Ladekapazität ausgestattet werden und das Ladeverfahren entsprechend auf die Art des Akkumulators abgestimmt werden.

Gemäß einem weiteren Merkmal der Erfindung ist vorgesehen, dass die Ladesteuerung des Ladegeräts zur Steuerung der Ladung des Akkumulators entsprechend einem maximalen Ladestrom im Schweißbetrieb des Schweißgeräts ausgebildet ist. Dadurch ist gewährleistet, dass die Ladung des Akkumulators des Schweißgeräts im Bereitschaftsbetrieb bzw. im Schweißbetrieb bei besonders niedrigem Schweißstrom gemäß einer vorgegebenen Ladekennlinie geladen wird, wohingegen im Schweißbetrieb, während ein relativ hoher Schweißstrom aus dem Akkumulator entnommen wird, die Ladung mit maximalem Ladestrom vorgenommen wird. Dadurch kann je nach Betriebsmodus des Schweißgeräts eine optimale Ladung des Akkumulators erfolgen und sowohl eine Schonung des Akkumulators als auch eine möglichst kurze Ladedauer erzielt werden. Darüber hinaus soll eine maximale Leistungsunterstützung im Schweißbetrieb gewährleistet werden.

Von Vorteil ist es weiters, wenn im Schweißgerät eine Akkusteuerung zur Überwachung des Ladezustands des Akkumulators vorgesehen ist, welche mit der Schweißsteuerung über eine Kommunikationsverbindung verbunden ist. Somit kann der Schweißsteuerung Information über den Ladezustand des Akkumulators übermittelt worden, welche in die Steuerung des Schweißgeräts einbezogen werden kann. Die Kommunikationsverbindung kann, wie bereits oben erwähnt, sowohl drahtlos als auch leitungsgebunden oder durch Modulation auf vorhandenen anderweitig verwendeten Leitungen realisiert werden.

Von Vorteil ist es, wenn das Schweißgerät eine Anzeige zur Anzeige des Ladezustands des Akkumulators aufweist. Über diese Anzeige des Ladezustands erhält der Schweißer eine wichtige Information darüber, ob er geplante Schweißprozesse noch mit der vorhandenen Lademenge des Akkumulators durchführen kann.

Wenn im Schweißgerät eine Abschalteinrichtung zur Abschaltung des Schweißgeräts nach Überschreitung einer vorgegebenen Zeitspanne im Bereitschaftsbetrieb ausgebildet ist, kann Energie des Akkumulators eingespart werden, indem das Schweißgerät entsprechend abgeschaltet wird. Über einen entsprechenden Aufweckzyklus kann nach Bedienung eines Bedienungselements, Betätigung des Schweißbrenners oder durch Anstecken des Ladegeräts wieder die Inbetriebnahme des Schweißgeräts vorgenommen werden.

Wenn ein Temperatursensor zur Messung der Temperatur des Akkumulators vorgesehen ist, welcher Temperatursensor mit der Akkusteuerung verbunden ist, kann eine temperaturabhängige Steuerung des Akkumulators und über die oben erwähnten Kommunikationsverbindungen auch eine entsprechende Steuerung der Ladung des Akkumulators in Abhängigkeit der Temperatur vorgenommen werden. Beispielsweise kann die Ladung des Akkumulators in Abhängigkeit der Umgebungstemperatur verschiedenartig gestaltet werden. Andererseits kann eine Überhitzung des Akkumulators über den Temperatursensor auch rechtzeitig erfasst und entsprechende Signale abgegeben oder Maßnahmen gesetzt werden.

Das Ladegerät der tragbaren Schweißanordnung kann auch im Schweißgerät integriert sein. Dies erhöht zwar das Gewicht der tragbaren Schweißanordnung, erleichtert jedoch auch die Handhabung, da die Verbindung zwischen dem Ladegerät und dem Schweißgerät nicht mehr manuell hergestellt werden muss. Bei der Integration des Ladegeräts im Schweißgerät ist es von Vorteil, wenn die Ladesteuerung und die Schweißsteuerung sowie allenfalls die Akkusteuerung in einer gemeinsamen Steuereinrichtung vereint sind, welche durch einen entsprechenden Mikroprozessor oder Mikrocontroller gebildet sein kann.

Um die Lebensdauer des Akkumulators im Schweißgerät der tragbaren Schweißanordnung zu erhöhen, ist es von Vorteil, wenn der Akkumulator mit einer Kühleinrichtung verbunden ist. Dabei kann die Verlustwärme von den Akkumulatoren über entsprechende Lüfter, Kühlkörper und/oder auch flüssigkeitsgekühlte Systeme abgeführt werden.

Gelöst wird die erfindungsgemäße Aufgabe auch durch ein oben genanntes Verfahren zum Betreiben einer tragbaren Schweißanordnung, bei dem die Ladung des Akkumulators durch die Ladesteuerung des Ladegeräts in Abhängigkeit des Betriebsmodus des Schweißgeräts gesteuert wird, wobei der Akkumulator im Bereitschaftsbetrieb des Schweißgeräts von der Ladesteuerung des Ladegeräts entsprechend zumindest einer vorgegebenen Ladekennlinie und im Schweißbetrieb des Schweißgeräts entsprechend einem vom Schweißstrom abhängigen Ladestrom aufgeladen wird. Zu den dazu erzielbaren Vorteilen und möglichen fakultativen Merkmalen wird auf die obige Beschreibung der tragbaren Schweißanordnung verwiesen.

Die vorliegende Erfindung wird anhand der beigefügten Zeichnungen, welche Ausführungsbeispiele der Erfindung zeigen, näher erläutert.

### Darin zeigen

Fig. 1 ein Blockschaltbild einer tragbaren Schweißanordnung gemäß der vorliegenden Patentanmeldung;
Fig. 2 ein Flussdiagramm zur Veranschaulichung einer Ausführungsform eines Verfahrens zum Betreiben einer tragbaren Schweißanordnung gemäß der vorliegenden Patentanmeldung;
Fig. 3 eine alternative Ausführungsform einer tragbaren Schweißanordnung mit integriertem Ladegerät; und
Fig. 4 ein Ein-/Ausgabepaneel eines Schweißgeräts einer tragbaren Schweißanordnung.

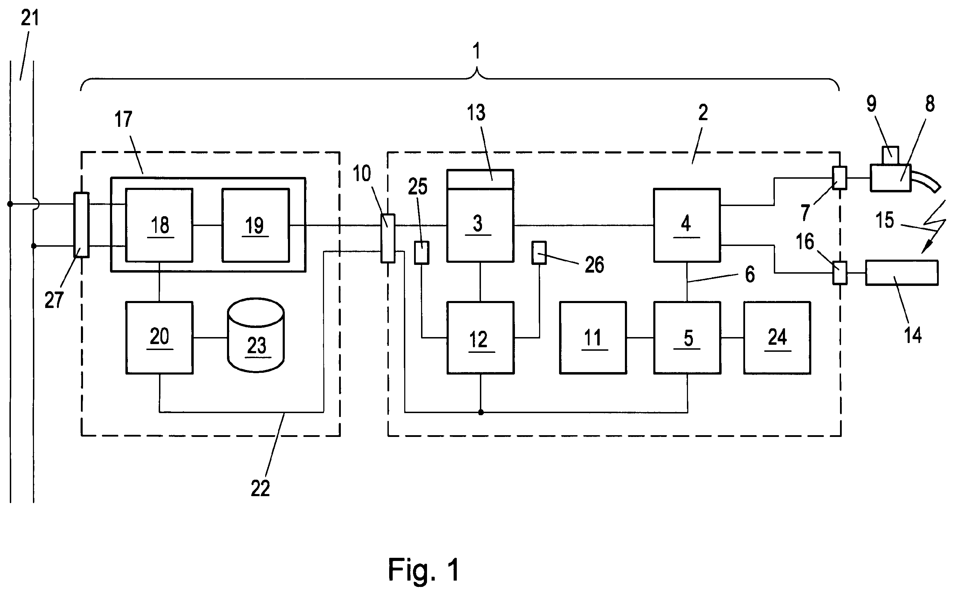

Fig. 1 zeigt ein Blockschaltbild einer Ausführungsform einer tragbaren Schweißanordnung 1 gemäß der vorliegenden Erfindung mit einem Schweißgerät 2 mit zumindest einem Akkumulator 3, einer Stromquelle 4 bzw. DC/DC-Konverter und einer Schweißsteuerung 5, welche über eine entsprechende Leitung 6 zur analogen oder digitalen Kommunikation miteinander verbunden sind. Selbstverständlich kann die Ansteuerung der Stromquelle 4 auch mittels Übertrager, Gatetreiber und/oder ähnlichen Schaltungen - wie allgemein aus dem Stand der Technik bekannt - erfolgen. Über einen Anschluss 7 kann ein Schweißbrenner 8 mit dem Schweißgerät 2 verbunden werden. Je nach verwendeten Schweißverfahren kann auch ein Schweißdraht und ein Kühlmedium vom Schweißgerät 2 zum Schweißbrenner 8 geführt werden. Über ein Bedienungselement 9 am Schweißbrenner 8 kann der Betriebsmodus des Schweißgeräts 2 zwischen einem Bereitschaftsbetrieb und einem Schweißbetrieb gewechselt werden. Das Bedienungselement 9 ist nicht zwingend erforderlich. Der Wechsel zwischen dem Bereitschaftsbetrieb und dem Schweißbetrieb kann auch durch eine Kontaktzündung vorgenommen werden, indem der Schweißbrenner 8 am zugehörigen Werkstück 14 aufgesetzt wird und der Lichtbogen 15 automatisch gezündet wird. Gelöscht wird der Lichtbogen 15 durch Entfernen des Schweißbrenners 8 vom Werkstück 14. Selbstverständlich kann der Wechsel auch am Schweißgerät 2 durchgeführt werden.

Weiters verfügt das Schweißgerät 2 über einen Ladeanschluss 10, über den das Schweißgerät 2 mit einem Ladegerät 17 verbunden werden kann, so dass der Akkumulator 3 aufgeladen werden kann. Eine Anzeige 11, welche mit der Schweißsteuerung 5 des Schweißgeräts 2 verbunden ist, gibt dem Schweißer wichtige Informationen, insbesondere auch über den Ladezustand des Akkumulators 3.

Vorzugsweise ist eine Akkusteuerung 12 ebenfalls im Schweißgerät 2 enthalten und/oder im Akkumulator 3 integriert, welche die optimale Steuerung des Akkumulators 3 bewerkstelligt. Beispielsweise kann in Abhängigkeit der Art des Akkumulators 3 eine unterschiedliche Steuerung des Akkumulators 3 vorgenommen werden. Zu diesem Zweck kann eine Akkukennung 13 vorgesehen sein, welche beispielsweise durch einen am Akkumulator 3 angebrachten Speicher oder ein RFID (Radio Frequency Identification) Etikett gebildet sein kann, enthalten sein kann.

Die zu verschweißenden Werkstücke 14 sind über eine entsprechende Leitung mit einem Masseanschluss 16 des Schweißgeräts 2 verbunden.

Das Ladegerät 17 ist aus entsprechenden Wandlern 18 und Treibern 19, welche den Leistungsteil bilden, aufgebaut, welche die vom Versorgungsnetz 21 herrührende Energie auf die zur Ladung des Akkumulators 3 notwendige Spannung und den notwendigen Strom umformen. Über eine Ladesteuerung 20 wird das Ladeverfahren des Ladegeräts 17 vorgegeben.

Erfindungsgemäß ist die Ladesteuerung 20 des Ladegeräts 17 über eine Kommunikationsverbindung 22 mit der Schweißsteuerung 5 des Schweißgeräts 2 verbunden. Dadurch ist es möglich, die Ladung des Akkumulators 3 des Schweißgeräts 2 in Abhängigkeit des Betriebsmodus des Schweißgeräts 2 vorzunehmen. Die bereits oben erwähnte Akkusteuerung 12 kann ebenfalls über eine Kommunikationsverbindung 22 mit der Schweißsteuerung 5 und der Ladesteuerung 20 verbunden sein. Wie bereits oben erwähnt, kann die Kommunikationsverbindung 22 durch eine drahtlose oder leitungsgebundene Verbindung realisiert werden oder auch durch entsprechende Modulation einer vorhandenen Energie oder Versorgungsleitung bewerkstelligt werden. Bei einer leitungsgebundenen Kommunikationsverbindung 22 erfolgt die Verbindung bevorzugt über den Ladeanschluss 10.

Die Kommunikationsverbindung kann auch derart ausgeführt sein, dass das Ladegerät 17 einen Spannungspegel an die Akkusteuerung 12 liefert, sodass die Akkusteuerung 12 das Vorhandensein des Ladegeräts 17 erkennt. Auf diese Weise kann die Akkusteuerung 12 auch aktiviert werden, wenn das Schweißgerät 2 ausgeschaltet ist.

Ebenso kann die Akkusteuerung 12 selbstständig - also auch ohne Kommunikationsverbindung - das Vorhandensein des Ladegeräts 17 erkennen. Beispielsweise erfolgt dies derart, dass von der Akkusteuerung 12 ein Ladestrom des Ladegeräts 17 gemessen wird. Dementsprechend kann auf diese Weise wiederum die Akkusteuerung 12 auch aktiviert werden, wenn das Schweißgerät 2 ausgeschaltet ist.

In einem Speicher 23 im Ladegerät 17 können Ladekennlinien oder Ladeparameter gespeichert sein, anhand welcher die Ladesteuerung 20 das entsprechend geeignete Ladeverfahren zum Laden des Akkumulators 3 des Schweißgeräts 2 in Abhängigkeit des Betriebsmodus des Schweißgeräts 2 auswählt. Beispielsweise kann im Speicher 23 zumindest eine entsprechende Ladekennlinie gemäß der der Akkumulator 3 im Bereitschaftsbetrieb des Schweißgeräts 2 geladen werden soll, abgelegt sein. Im Schweißbetrieb wird die Ladekennlinie entsprechend an den eingestellten Schweißstrom angepasst. So wird einerseits der Schweißstrom aus dem Akkumulator 3 entnommen und gleichzeitig der Akkumulator 3 geladen. Andererseits wird ein maximaler Schweißstrom direkt vom Ladegerät 17 zur Verfügung gestellt, wenn dieses am Schweißgerät 2 angeschlossen ist.

Im Schweißgerät 2 kann weiters eine Abschalteinrichtung 24 enthalten sein, die mit der Schweißsteuerung 5 verbunden ist und das Schweißgerät 2 dann abschaltet, wenn eine vorgegebene Zeitspanne Δt im Bereitschaftsbetrieb überschritten wird. Auf diese Weise kann Energie des Akkumulators 3 bei Nicht-Betrieb des Schweißgeräts 2 gespart werden.

Ein Temperatursensor 25 kann die Temperatur des Akkumulators 3 messen und der Akkusteuerung 12 oder auch der Schweißsteuerung 5 weiterleiten. Über eine verschiedenartig ausbildbare Kühleinrichtung 26 kann Verlustwärme vom Akkumulator 3 abgeführt werden.

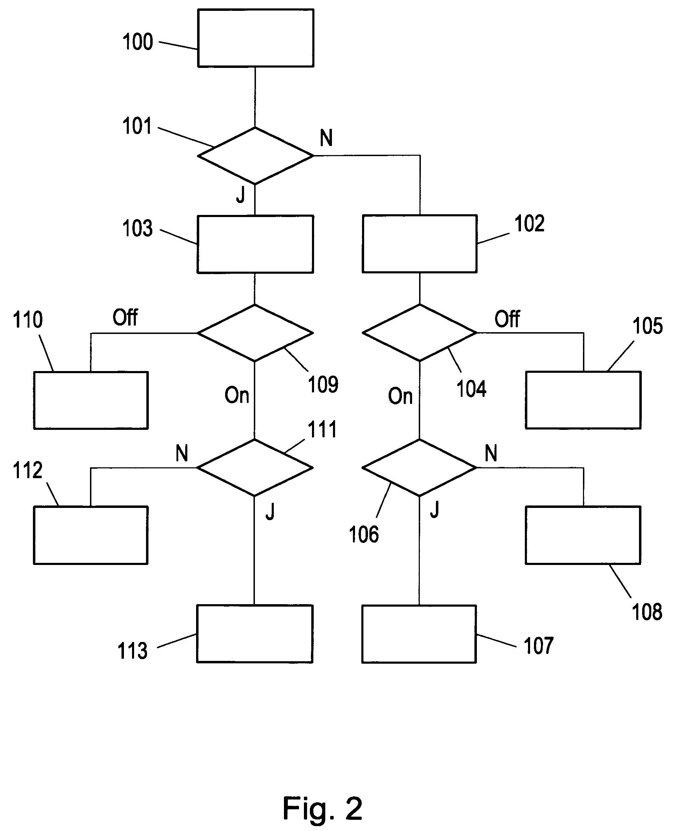

Fig. 2 zeigt ein Blockschaltbild zur Veranschaulichung des Verfahrens zum Betreiben einer tragbaren Schweißanordnung 1 gemäß der vorliegenden Anmeldung. Dieses Verfahren kann beispielsweise in der Schweißsteuerung 5 softwaretechnisch implementiert werden, wobei dies auch in der Akkusteuerung 12 oder der Ladesteuerung 20 möglich ist. Gemäß Block 100 wird das Verfahren gestartet und initialisiert, wenn das Schweißgerät 2 eingeschaltet wird. Bei der Abfrage 101 wird überprüft, ob das Ladegerät mit dem Schweißgerät verbunden ist. Ist das Ladegerät 17 nicht mit dem Schweißgerät 2 verbunden, befindet sich das Schweißgerät 2 im netzunabhängigen Betrieb (Block 102). Wird erkannt, dass das Ladegerät 17 am Schweißgerät 2 angeschlossen ist, befindet sich das Schweißgerät 2 im sogenannten Hybridbetrieb (Block 103). Im netzunabhängigen Betrieb wird mit der Abfrage 104 überprüft, ob das Schweißgerät 2 abgeschaltet ist, was beispielsweise bei Überschreitung einer voreingestellten Zeitspanne im Bereitschaftsbetrieb automatisch erfolgen kann. Wird erkannt, dass das Schweißgerät 2 abgeschaltet ist, gelangt man zu Block 105. Ist das Schweißgerät nicht abgeschaltet, so wird gemäß Abfrage 106 der Betriebsmodus des Schweißgeräts 2 überprüft und beim Bereitschaftsbetrieb zu Block 108 und im Schweißbetrieb zu Block 107 gesprungen. Entsprechend kann also gemäß Block 107 ein Schweißverfahren durchgeführt werden.

Die Abfrage gemäß Block 101 wird dabei beispielsweise derart durchgeführt, indem das Ladegerät 17 über die Kommunikationsverbindung 22 das Vorhandensein zumindest an die Akkusteuerung 5 übermittelt.

Im sogenannten Hybridbetrieb, also bei angeschlossenem Ladegerät, folgt mit Abfrage 109 die Überprüfung, ob das Schweißgerät 2 abgeschaltet ist, bejahendenfalls wird mit Block 110 fortgefahren - also der Akkumulator 3 geladen und der Ladezustand angezeigt. Ist das Schweißgerät 2 nicht abgeschaltet, wird gemäß Abfrage 111 der Betriebsmodus des Schweißgeräts 2 überprüft und bei Bereitschaftsbetrieb zu Block 112 und bei Schweißbetrieb zu Block 113 gesprungen. Die Überprüfung des Betriebsmodus des Schweißgeräts kann beispielsweise über Messung des Schweißstromes erfolgen. Befindet sich das Schweißgerät im Schweißbetrieb bei angeschlossenem Ladegerät (Block 113), wird das Ladegerät angewiesen, die Ladung des Akkumulators mit maximal möglichen Ladestrom vorzunehmen. Ebenso kann das Ladegerät 17 selbstständig - also auch ohne Kommunikationsverbindung 22 - den Betriebsmodus feststellen, indem beim Start des Schweißvorganges ein Spannungs- und Stromprofil des Akkumulators 3 ausgewertet wird, also beispielsweise ein Spannungseinbruch detektiert wird. Das Spannungs- und Stromprofil wird dabei über die Ladeleitungen, welche am Ladeanschluss 10 angeschlossen sind, erfasst. Somit wird vom Ladegerät 17 von einer normalen Ladekennlinie auf die Kennlinie für den Hybridbetrieb umgeschaltet.

Befindet sich das Schweißgerät im Bereitschaftsbetrieb mit angeschlossenem Ladegerät (Block 112), erfolgt die Ladung des Akkumulators nach einer vorgegebenen Ladekennlinie. Zusätzlich könnte im Schweißbetrieb noch die Höhe des Schweißstromes erfasst werden und beispielsweise bei niedrigem Schweißstrom die Ladung des Akkumulators ebenfalls mit einer vorgegebenen Ladekennlinie durchgeführt werden, wohingegen bei Überschreitung eines vorgegebenen Schweißstromes die Ladung mit maximal möglichem Ladestrom vorgenommen wird. Nach den Blöcken 107, 108, 112 und 113 wird üblicherweise wieder zur Abfrage 101 gesprungen.

Das geschilderte Verfahren kann auch auf mehr Schweißkennlinien in Abhängigkeit verschiedener Schweißzustände abgeändert werden und ist softwaretechnisch implementierbar.

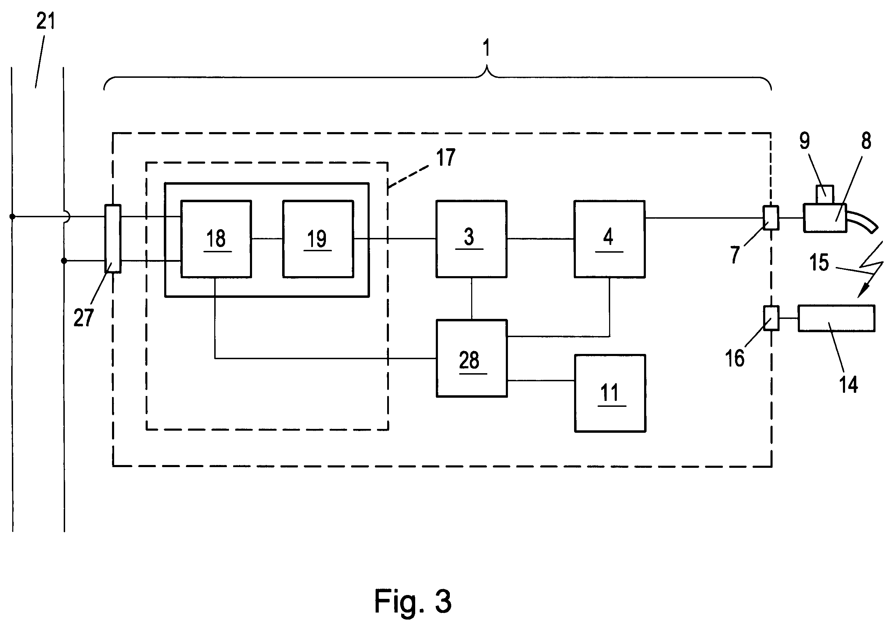

Fig. 3 zeigt nun eine gegenüber Fig. 1 abgewandelte Form einer tragbaren Schweißanordnung 1, bei der das Ladegerät 17 im Schweißgerät 2 integriert ist. Zusätzlich zu den oben geschilderten Komponenten weist das Schweißgerät nunmehr einen Netzanschluss 27 zur Verbindung des Wandlers 18 (bzw. Leistungsteils) des Ladegeräts 17 mit dem Versorgungsnetz 21 auf. In der dargestellten Ausführungsvariante sind die Schweißsteuerung 5, die Ladesteuerung 20 und die Akkusteuerung 12 in einer gemeinsamen Steuereinrichtung 28 vereint.

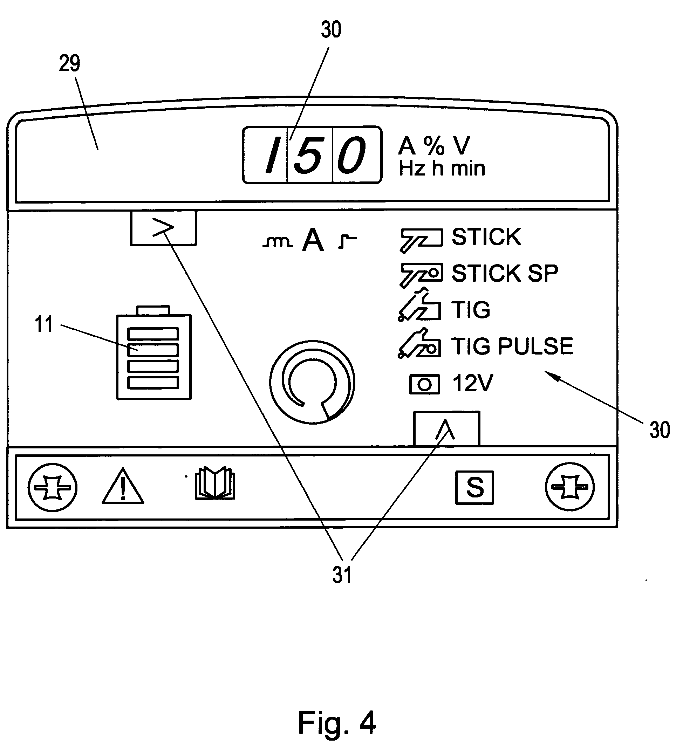

Fig. 4 zeigt nun eine Ausführungsvariante eines Ein-/Ausgabepaneels 29 eines Schweißgeräts 2 einer tragbaren Schweißanordnung 1 gemäß der vorliegenden Anmeldung, welche neben einer Anzeige 11 zur Anzeige des Ladezustands des Akkumulators 3 auch verschiedene Parameteranzeigen 30 beinhaltet und ein Bedienungselement 31 zum Ändern von Schweißparametern, wie z.B. dem Schweißstrom. Wichtig ist es, den Schweißer über die Anzeige 11 eine Information über den Ladezustand des Akkumulators 3 wiederzugeben, so dass dieser die Schweißprozesse an den Ladezustand des Akkumulators 3 anpassen kann.

## Patentansprüche

1. Tragbare Schweißanordnung (1) mit einem Schweißgerät (2) mit einem Akkumulator (3), einer Stromquelle (4), einer Schweißsteuerung (5) und einem Anschluss (7) für einen Schweißbrenner (8), wobei der Betriebsmodus des Schweißgeräts (2) zwischen einem Bereitschaftsbetrieb und einem Schweißbetrieb wechselbar ist, und mit einem mit einem Versorgungsnetz (21) und dem Schweißgerät (2) verbindbaren Ladegerät (17) mit einer Ladesteuerung (20) zum Laden des Akkumulators (3), **dadurch gekennzeichnet, dass** die Ladesteuerung (20) des Ladegeräts (17) zur Steuerung der Ladung des Akkumulators (3) des Schweißgeräts (2) in Abhängigkeit des Betriebsmodus des Schweißgeräts (2) ausgebildet ist, wobei die Ladesteuerung (20) des Ladegeräts (17) mit einem Speicher (23) zum Speichern zumindest einer Ladekennlinie verbunden ist und zur Steuerung der Ladung des Akkumulators (3) entsprechend der zumindest einen vorgegebenen Ladekennlinie im Bereitschaftsbetrieb des Schweißgeräts (2) und entsprechend einem vom Schweißstrom abhängigen Ladestrom im Schweißbetrieb des Schweißgeräts (2) ausgebildet ist.

2. Tragbare Schweißanordnung (1) nach Anspruch 1, **dadurch gekennzeichnet, dass** die Schweißsteuerung (5) mit der Ladesteuerung (20) des Ladegeräts (17) über eine Kommunikationsverbindung (22) verbunden ist.

3. Tragbare Schweißanordnung (1) nach Anspruch 1 oder 2, **dadurch gekennzeichnet, dass** die Ladesteuerung (20) des Ladegeräts (17) zur Steuerung der Ladung des Akkumulators (3) des Schweißgeräts (2) in Abhängigkeit der Art des Akkumulators (3) ausgebildet ist.

4. Tragbare Schweißanordnung (1) nach einem der Ansprüche 1 bis 3, **dadurch gekennzeichnet, dass** die Ladesteuerung (20) des Ladegeräts (17) zur Steuerung der Ladung des Akkumulators (3) entsprechend einem maximalen Ladestrom (I_{L,max}) im Schweißbetrieb des Schweißgeräts (2) ausgebildet ist.

5. Tragbare Schweißanordnung (1) nach einem der Ansprüche 1 bis 4, **dadurch gekennzeichnet, dass** im Schweißgerät (2) eine Akkusteuerung (12) zur Überwachung des Ladezustandes des Akkumulators (3) vorgesehen und mit der Schweißsteuerung (5) über eine Kommunikationsverbindung (22) verbunden ist.

6. Tragbare Schweißanordnung (1) nach einem der Ansprüche 1 bis 5, **dadurch gekennzeichnet, dass** das Schweißgerät (2) eine Anzeige (11) zur Anzeige des Ladezustandes des Akkumulators (3) aufweist.

7. Tragbare Schweißanordnung (1) nach einem der Ansprüche 1 bis 6, **dadurch gekennzeichnet, dass** im Schweißgerät (2) eine Abschalteinrichtung (24) zur Abschaltung des Schweißgeräts (2) nach Überschreitung einer vorgegebenen Zeitspanne (Δt) im Bereitschaftsbetrieb ausgebildet ist.

8. Tragbare Schweißanordnung (1) nach einem der Ansprüche 1 bis 7, **dadurch gekennzeichnet, dass** ein Temperatursensor (23) zur Messung der Temperatur des Akkumulators (3) vorgesehen ist, welcher Temperatursensor (25) mit der Akkusteuerung (12) verbunden ist.

9. Tragbare Schweißanordnung (1) nach einem der Ansprüche 1 bis 8, **dadurch gekennzeichnet, dass** das Ladegerät (17) im Schweißgerät (2) integriert ist.

10. Tragbare Schweißanordnung (1) nach einem der Ansprüche 1 bis 9, **dadurch gekennzeichnet, dass** der Akkumulator (3) mit einer Kühleinrichtung (26) verbunden ist.

11. Verfahren zum Betreiben einer tragbaren Schweißanordnung (1) mit einem Schweißgerät (2) mit einem Akkumulator (3), einer Stromquelle (4), einer Schweißsteuerung (5) und einem Anschluss (7) für einen Schweißbrenner (8), wobei der Betriebsmodus des Schweißgeräts (2) zwischen einem Bereitschaftsbetrieb und einem Schweißbetrieb gewechselt wird, wobei der Akkumulator (3) des Schweißgeräts (2) zum Laden mit einem mit einem Versorgungsnetz (21) verbundenen Ladegerät (17) verbunden wird, **dadurch gekennzeichnet, dass** die Ladung des Akkumulators (3) durch die Ladesteuerung (20) des Ladegeräts (17) in Abhängigkeit des Betriebsmodus des Schweißgeräts (2) gesteuert wird, wobei der Akkumulator (3) im Bereitschaftsbetrieb des Schweißgeräts (2) von der Ladesteuerung (20) des Ladegeräts (17) entsprechend zumindest einer vorgegebenen Ladekennlinie und im Schweißbetrieb des Schweißgeräts (2) entsprechend einem vom Schweißstrom abhängigen Ladestrom aufgeladen wird.

12. Verfahren nach Anspruch 11, **dadurch gekennzeichnet, dass** der Betriebszustand des Schweißgeräts (2) von der Schweißsteuerung (5) an die Ladesteuerung (20) des Ladegeräts (17) über eine Kommunikationsverbindung (22) übermittelt wird.

13. Verfahren nach Anspruch 11, **dadurch gekennzeichnet, dass** vom Ladegerät (17) der Betriebsmodus des Schweißgeräts (2) über die Messung eines Spannungs- und Stromprofils erfasst wird.

14. Verfahren nach einem der Ansprüche 11 bis 13, **dadurch gekennzeichnet, dass** die Ladung des Akkumulators (3) durch die Ladesteuerung (20) des Ladegeräts (17) in Abhängigkeit der Art des Akkumulators (3) gesteuert wird.

15. Verfahren nach einem der Ansprüche 12 bis 14, **dadurch gekennzeichnet, dass** das Vorhandensein des Ladegeräts (17) über die Kommunikationsverbindung (22) erkannt und an die Schweißsteuerung (5) übermittelt wird.

16. Verfahren nach einem der Ansprüche 11 bis 15, **dadurch gekennzeichnet, dass** der Akkumulator (3) im Schweißbetrieb des Schweißgeräts (2) mit maximal möglichem Ladestrom (I_{L,max}) aufgeladen wird.

17. Verfahren nach einem der Ansprüche 11 bis 16, **dadurch gekennzeichnet, dass** der Ladezustand des Akkumulators (3) von einer Akkusteuerung (12) im Schweißgerät (2) überwacht und vorzugsweise an einer Anzeige (11) des Schweißgeräts (2) angezeigt wird.

18. Verfahren nach einem der Ansprüche 11 bis 17, **dadurch gekennzeichnet, dass** das Schweißgerät (2) nach Überschreitung einer vorgegebenen Zeitspanne (Δt) im Bereitschaftsbetrieb abgeschaltet wird.

19. Verfahren nach einem der Ansprüche 11 bis 18, **dadurch gekennzeichnet, dass** die Temperatur des Akkumulators (3) mit einem Temperatursensor (25) gemessen und an die Akkusteuerung (12) und bzw. oder die Schweißsteuerung (5) weitergeleitet wird.

## Claims

1. A portable welding arrangement (1) comprising a welding apparatus (2) having a rechargeable battery (3), a power source (4), a welding control means (5) and a connection (7) for a welding torch (8), wherein the operating mode of the welding apparatus (2) can be changed between a standby mode and a welding mode, and comprising a charging apparatus (17) that can be connected to a power supply network (21) and to the welding apparatus (2) and has a charge controller (20) for charging the rechargeable battery (3), **characterized in that** the charge controller (20) of the charging apparatus (17) is designed to control the charge or charging of the rechargeable battery (3) of the welding apparatus (2) in accordance with the operating mode of the welding apparatus (2), wherein the charge controller (20) of the charging apparatus (17) is connected to a memory (23) for storing at least one charging characteristic and is designed to control the charge or charging of the rechargeable battery (3) in the standby mode of the welding apparatus (2) in accordance with the at least one specified charging characteristic and in the welding mode of the welding apparatus (2) in accordance with a charging current being dependent on the welding current.

2. The portable welding arrangement (1) according to claim 1, **characterized in that** the welding control means (5) is connected to the charge controller (20) of the charging apparatus (17) via a communication link (22).

3. The portable welding arrangement (1) according to claim 1 or 2, **characterized in that** the charge controller (20) of the charging apparatus (17) is designed to control the charge or charging of the rechargeable battery (3) of the welding apparatus (2) in accordance with the type of the rechargeable battery (3).

4. The portable welding arrangement (1) according to anyone of claims 1 to 3, **characterized in that** the charge controller (20) of the charging apparatus (17) is designed to control the charge or charging of the rechargeable battery (3) in accordance with a maximum charging current (I_{L,max}) in the welding mode of the welding apparatus (2).

5. The portable welding arrangement (1) according to anyone of claims 1 to 4, **characterized in that** within the welding apparatus (2) there is provided a rechargeable battery controller (12) for monitoring the state of charge of the rechargeable battery (3), said rechargeable battery controller (12) being connected to the welding control means (5) via a communication link (22).

6. The portable welding arrangement (1) according to anyone of claims 1 to 5, **characterized in that** the welding apparatus (2) comprises a display (11) for displaying the state of charge of the rechargeable battery (3).

7. The portable welding arrangement (1) according to anyone of claims 1 to 6, **characterized in that** within the welding apparatus (2) there is formed a deactivation device (24) for turning the welding apparatus (2) off after the exceeding of a predetermined period of time (Δt) in the standby mode.

8. The portable welding arrangement (1) according to anyone of claims 1 to 7, **characterized in that** a temperature sensor (23) for measuring the temperature of the rechargeable battery (3) is provided, said temperature sensor (25) being connected to the rechargeable battery controller (12).

9. The portable welding arrangement (1) according to anyone of claims 1 to 8, **characterized in that** the charging apparatus (17) is integrated in the welding apparatus (2).

10. The portable welding arrangement (1) according to anyone of claims 1 to 9, **characterized in that** the rechargeable battery (3) is connected to a cooling device (26).

11. A method for operating a portable welding arrangement (1) comprising a welding apparatus (2) having a rechargeable battery (3), a power source (4), a welding control means (5) and a connection (7) for a welding torch (8), wherein the operating mode of the welding apparatus (2) is changed between a standby mode and a welding mode, wherein the rechargeable battery (3) of the welding apparatus (2), for the charging thereof, will be connected to a charging apparatus (17) connected to a power supply network (21), **characterized in that** the charge or charging of the rechargeable battery (3) is controlled by the charge controller (20) of the charging apparatus (17) in accordance with the operating mode of the welding apparatus (2), wherein the rechargeable battery (3) is charged in the standby mode of the welding apparatus (2) by the charge controller (20) of the charging apparatus (17) in accordance with at least one specified charging characteristic and in the welding mode of the welding apparatus (2) in accordance with a charging current being dependent on the welding current.

12. The method according to claim 11, **characterized in that** the operating mode of the welding apparatus (2) is transmitted from the welding control means (5) to the charge controller (20) of the charging apparatus (17) via a communication link (22).

13. The method according to claim 11, **characterized in that** the operating mode of the welding apparatus (2) is detected by the charging apparatus (17) via the measurement of a voltage and current profile.

14. The method according to anyone of claims 11 to 13, **characterized in that** the charge or charging of the rechargeable battery (3) is controlled by the charge controller (20) of the charging apparatus (17) in accordance with the type of the rechargeable battery (3).

15. The method according to anyone of claims 12 to 14, **characterized in that** the presence of the charging apparatus (17) is recognized via the communication link (22) and is transmitted to the welding control means (5).

16. The method according to anyone of claims 11 to 15, **characterized in that** the rechargeable battery (3) is charged in the welding mode of the welding apparatus (2) with a maximum possible charging current (I_{L,max}).

17. The method according to anyone of claims 11 to 16, **characterized in that** the state of charge of the rechargeable battery (3) is monitored by a rechargeable battery controller (12) in the welding apparatus (2) and is displayed preferably on a display (11) of the welding apparatus (2).

18. The method according to anyone of claims 11 to 17, **characterized in that** the welding apparatus (2) is turned off after the exceeding of a predetermined period of time (Δt) in the standby mode.

19. The method according to anyone of claims 11 to 18, **characterized in that** the temperature of the rechargeable battery (3) is measured by means of a temperature sensor (25) and is forwarded to the rechargeable battery controller (12) and/or to the welding control means (5).

## Revendications

1. Dispositif de soudure portable (1) avec un appareil de soudure (2) avec un accumulateur (3), une source de courant (4), une commande de soudure (5) et un raccordement (7) pour un chalumeau de soudure (8), le mode de fonctionnement de l'appareil de soudure (2) pouvant être changé entre un mode veille et un mode soudure, et avec un appareil de charge (17) pouvant être relié avec un réseau d'alimentation (21) et l'appareil de soudure (2), avec une commande de charge (20) pour charger l'accumulateur (3), **caractérisé en ce que** la commande de charge (20) de l'appareil de charge (17) est conçue pour la commande de la charge de l'accumulateur (3) de l'appareil de soudure (2) en fonction du mode de fonctionnement de l'appareil de soudure (2), la commande de charge (20) de l'appareil de charge (17) étant reliée à une mémoire (23) et étant conçue pour l'enregistrement d'au moins une caractéristique de charge et pour la commande de la charge de l'accumulateur (3) en fonction de l'au moins une caractéristique de charge prédéterminée dans le mode veille de l'appareil de soudure (2) et en fonction d'un courant de charge dépendant du courant de soudure en mode soudure de l'appareil de soudure (2).

2. Dispositif de soudure portable (1) selon la revendication 1, **caractérisé en ce que** la commande de soudure (5) est reliée avec la commande de charge (20) de l'appareil de charge (17) par l'intermédiaire d'une liaison de communication (22).

3. Dispositif de soudure portable (1) selon la revendication 1 ou 2, **caractérisé en ce que** la commande de charge (20) de l'appareil de charge (17) est conçue pour la commande de la charge de l'accumulateur (3) de l'appareil de soudure (2) en fonction du type d'accumulateur (3).

4. Dispositif de soudure portable (1) selon l'une des revendications 1 à 3, **caractérisé en ce que** la commande de charge (20) de l'appareil de charge (17) est conçue pour la commande de la charge de l'accumulateur (3) en fonction d'un courant de charge maximal (I_{L, max}) en mode soudure de l'appareil de soudure (2).

5. Dispositif de soudure portable (1) selon l'une des revendications 1 à 4, **caractérisé en ce que**, dans l'appareil de soudure (2), se trouve une commande d'accumulateur (12) pour la surveillance de l'état de charge de l'accumulateur (3), qui est reliée avec la commande de soudure (5) par l'intermédiaire d'une liaison de communication (22).

6. Dispositif de soudure portable (1) selon l'une des revendications 1 à 5, **caractérisé en ce que** l'appareil de soudure (2) comprend un affichage (11) pour l'affichage de l'état de charge de l'accumulateur (3).

7. Dispositif de soudure portable (1) selon l'une des revendications 1 à 6, **caractérisé en ce que**, dans l'appareil de soudure (2), se trouve un dispositif d'arrêt (24) pour l'arrêt de l'appareil de soudure (2) après le dépassement d'un laps de temps prédéterminé (Δt) en mode veille.

8. Dispositif de soudure portable (1) selon l'une des revendications 1 à 7, **caractérisé en ce qu'**un capteur de température (23) est prévu pour la mesure de la température de l'accumulateur (3), ce capteur de température (25) étant relié à la commande de l'accumulateur (12).

9. Dispositif de soudure portable (1) selon l'une des revendications 1 à 8, **caractérisé en ce que** l'appareil de charge (17) est intégré dans l'appareil de soudure (2).

10. Dispositif de soudure portable (1) selon l'une des revendications 1 à 9, **caractérisé en ce que** l'accumulateur (3) est relié avec un dispositif de refroidissement (26).

11. Procédé de fonctionnement d'un dispositif de soudure portable (1) avec un appareil de soudure (2) avec un accumulateur (3), une source de courant (4), une commande de soudure (5) et un raccordement (7) pour un chalumeau de soudure (8), le mode de fonctionnement de l'appareil de soudure (2) étant changé entre un mode veille et un mode soudure, l'accumulateur (3) de l'appareil de soudure (2) étant relié, pour la charge, avec un appareil de charge (17) relié à un réseau d'alimentation (21), **caractérisé en ce que** la charge de l'accumulateur (3) est commandée par la commande de charge (20) de l'appareil de charge (17) en fonction du mode de fonctionnement de l'appareil de soudure (2), l'accumulateur (3) étant chargé, dans le mode veille de l'appareil de soudure (2) par la commande de charge (20) de l'appareil de charge (17) en fonction d'au moins une caractéristique de charge prédéterminée et dans le mode soudure de l'appareil de soudure (2) en fonction d'un courant de charge qui dépend du courant de charge.

12. Procédé selon la revendication 11, **caractérisé en ce que** l'état de fonctionnement de l'appareil de soudure (2) est transmis par la commande de soudure (5) à la commande de charge (20) de l'appareil de charge (17) par l'intermédiaire d'une liaison de communication (22).

13. Procédé selon la revendication 11, **caractérisé en ce que** le mode de fonctionnement de l'appareil de soudure (2) est déterminé par l'appareil de charge (17) par l'intermédiaire de la mesure d'un profil de tension et de courant.

14. Procédé selon l'une des revendications 11 à 13, **caractérisé en ce que** la charge de l'accumulateur (3) est commandée par la commande de charge (20) de l'appareil de charge (17) en fonction du type d'accumulateur (3).

15. Procédé selon l'une des revendications 12 à 14, **caractérisé en ce que** la présence de l'appareil de charge (17) est détectée et est transmise par l'intermédiaire de la liaison de communication (22) à la commande de soudure (5).

16. Procédé selon l'une des revendications 11 à 15, **caractérisé en ce que** l'accumulateur (3) est chargé, dans le mode soudure de l'appareil de soudure (2) avec un courant de charge maximal possible (I_{L, max}).

17. Procédé selon l'une des revendications 11 à 16, **caractérisé en ce que** l'état de charge de l'accumulateur (3) est surveillé par une commande d'accumulateur (12) dans l'appareil de soudure (2) et est affiché de préférence sur un affichage (11) de l'appareil de soudure (2).

18. Procédé selon l'une des revendications 11 à 17, **caractérisé en ce que** l'appareil de soudure (2) est arrêté après le dépassement d'un laps de temps prédéterminé (Δt) en mode veille.

19. Procédé selon l'une des revendications 11 à 18, **caractérisé en ce que** la température de l'accumulateur (3) est mesurée avec un capteur de température (25) et est transmise à la commande d'accumulateur (12) et/ou à la commande de soudure (5).
